Europäisches Patentamt

European Patent Office

Office européen des brevets

(11) Veröffentlichungsnummer: **0 335 228**

**A1**

(12) **EUROPÄISCHE PATENTANMELDUNG**

(21) Anmeldenummer: 89105048.6

(22) Anmeldetag: 21.03.89

(51) Int. Cl.4: **B65G 37/00 , B65G 21/22 , B23P 19/04**

(30) Priorität: 30.03.88 DE 3810880

(43) Veröffentlichungstag der Anmeldung:
04.10.89 Patentblatt 89/40

(84) Benannte Vertragsstaaten:
**AT BE CH DE ES FR GB GR IT LI LU NL SE**

(71) Anmelder: **Kochanneck, Uwe**
**Hohestrasse 38**
**D-4600 Dortmund 1(DE)**

(72) Erfinder: **Kochanneck, Uwe**
**Hohestrasse 38**
**D-4600 Dortmund 1(DE)**

(54) **Arbeitsplatz.**

(57) Bei einem Arbeitsplatz mit Laufschienen und verschieb- und drehbaren Arbeitsplatten die mit Verbindungrasterbohrungen ausgeführt werden soll durch Hinzufügung einer minimalen, baugleichen Anzahl von Bauteilen und Ergänzung durch zusätzliche Rasterbohrungen die Umbauflexibilität noch erhöht werden und Arbeitsplatz übergreifende Aufbauformen ermöglicht werden und die Zahl der Anwendungen noch erweitert werden. Zur Lösung dieser Aufgabe wird gemäß der Erfindung vorgesehen, daß die Arbeitsplatten (4) durch schmale Randarbeitsplatten (4', 4") ergänzt werden, daß die Arbeitsplatten (4) und Randarbeitsplatten (4',4") zusätzlich zu den Rasterbohrungen im Gelenkpunktabstand der Verbindungslaschen (2), Eckverbinder-Rasterbohrungen zur Aufnahme von Eckverbindern (5) erhalten, die baugleich den Eckverbindern (5) sind, die für die Verbindung zu Mehrfachplatten an den abgeschrägten Ecken eingesetzt werden, daß die Arbeitsplatten (4) gleich lang den Laufschienen (1) erstellt werden und die Arbeitsplatten (4) und Randarbeitsplatten (4', 4") in baugleicher Ausführung horizontal als Arbeitsplatten (4) und vertikal als Plattenstützen, über die Eckverbinder-Rasterbohrungen mit eingesetzten Eckverbindern (5) zu stationären Arbeitsplätzen aufgebaut werden und mit den Bauelementen der verschiebaren Arbeitsplätze kombiniert werden.

**Fig. 4**

## Arbeitsplatz

Die Erfindung betrifft einen Arbeitsplatz der im Oberbegriff des Patentanspruchs 1 genannten Art. Ein derartiger Arbeitsplatz ist aus dem Hauptpatent (DE 36 35 879 C 1) bekannt. Diese Anordnung erbringt den Vorteil, daß die Umbauflexibilität erhöht und Erweiterungen leicht möglich sind, wobei der Benutzerkomfort noch erhöht wird und die Vielfalt der Bauelemente auf ein Minimum an immer gleichen Bauelementen zurückgeführt wird.

Aufgabe der vorliegenden Erfindung ist es, die Vorteile dieser verschiebbaren Arbeitsplätze auch für stationäre Arbeitsplätze nutzbar nutzbar zu machen und Kombinationen mit den verschiebbaren Bauelementen der verschiebbaren Arbeitsplätze zu erreichen und dadurch die Umbauflexibilität noch zu erhöhen und bei Verwendung der minimalen und gleichen Bauelemente zusätzlich, Arbeitsplatz übergreifende Aufbauformen zu ermöglichen und die Zahl der Anwendungen noch zu erweitern. Dies ist gemäß der Erfindung dadurch erreicht, daß die Arbeitsplatten durch schmale Randarbeitsplatten ergänzt werden und die Arbeitsplatten und Randarbeitsplatten, zusätzlich zu den Rasterbohrungen im Gelenkpunktabstand der Verbindungslaschen, Eckverbinder-Rasterbohrungen zur Aufnahme von Eckverbindern erhalten, die baugleich den Eckverbindern sind, die für die Verbindung zu Mehrfachplatten an den abgeschrägten Ecken eingesetzt werden, daß die Arbeitsplatten gleich lang den Laufschienen ausgeführt werden und die Arbeitsplatten und Randarbeitsplatten in baugleicher Ausführung horizontal als Arbeitsplatten und vertikal als Plattenstützen, über die Eckverbinder-Rasterbohrungen mit eingesetzten Eckverbindern zu stationären Arbeitsplätzen aufgebaut werden und mit den Bauelementen der verschiebbaren Arbeitsplätze kombiniert werden.

Hiermit ist gegenüber dem nicht zum Stand der Technik gehörenden Gegenstand des Hauptpatents erreicht, daß stationäre Arbeitsplätze und verschiebbare Arbeitsplätze aus baugleichen Bauelementen erstellt werden können die auch miteinander kombiniert werden können, wobei die Vielfalt der Anwendungsmöglichkeiten und Aufbauformen noch erhöht wird, die notwendige Anzahl der Bauteile jedoch nicht vergrößert werden muß.

Ausgestaltungen der Erfindung sind in den Unteransprüchen genannt. Die Erfindung wird im folgenden anhand von Ausführungsbeispielen mit Bezug auf die Zeichnung näher erläutetert. In dieser zeigt

Fig. 1 teilweise in Explosionsdarstellung kurz vor dem Zusammensetzen, die Vorderansicht eines stationären Mehrfacharbeitsplatzes in Kombination mit Bauelementen der verschiebbaren Arbeitsplätze und die Verbindung mit einer im Grundriß um 90 Grad abgewinkelt aufgestellten Mehrfacharbeitsplatzlinie, im Seitenansichtsprofil.

Fig. 2 die Vorderansicht eines Mehrfachfacharbeitsplatzes, bestehend aus zwei Einzelarbeitsplätzen die über eine in den Eckauflagen eingesetzte Arbeitsplatte miteinander verbunden werden,

Fig. 3 die Draufsicht auf einen Mehrfacharbeitsplatz gemäß der Fig. 2,

Fig. 4 die Seitenansicht auf einen Computer-Mehrfacharbeitsplatz, mit Führungschiene in tiefergesetzter Mittellage,

Fig. 5 die Seitenansicht auf einen Arbeitsplatz mit neigungsverstellter Monitor- und Tastaturarbeitsplatte,

Fig. 6 die Vorderansicht auf einen Mehrfacharbeitsplatz und Erweiterung in der Höhe,

Fig. 7 die Vorderansicht auf einen Mehrfacharbeitsplatz, mit Arbeitsplattenverkleidung und Schiebetür,

Fig. 8 die Draufsicht auf die bauteilgleiche Raumausrüstung, von der stationären und kombiniert, stationär-verschiebbaren Arbeitsplatzinneneinrichtung bis zur doppelwandigen Raumwand mit Schiebetüröffnung und Schiebetürfensteröffnungen,

Fig. 9 die Seitenansicht auf die doppelwandige, aus Arbeitsplatten erstellte Raumeinheit mit Fensteröffnung und Schiebetür, gemäß der Fig. 8.

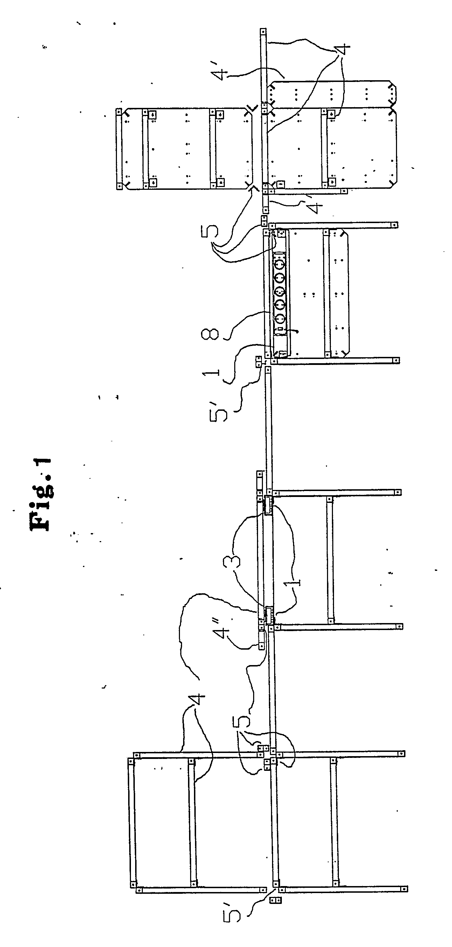

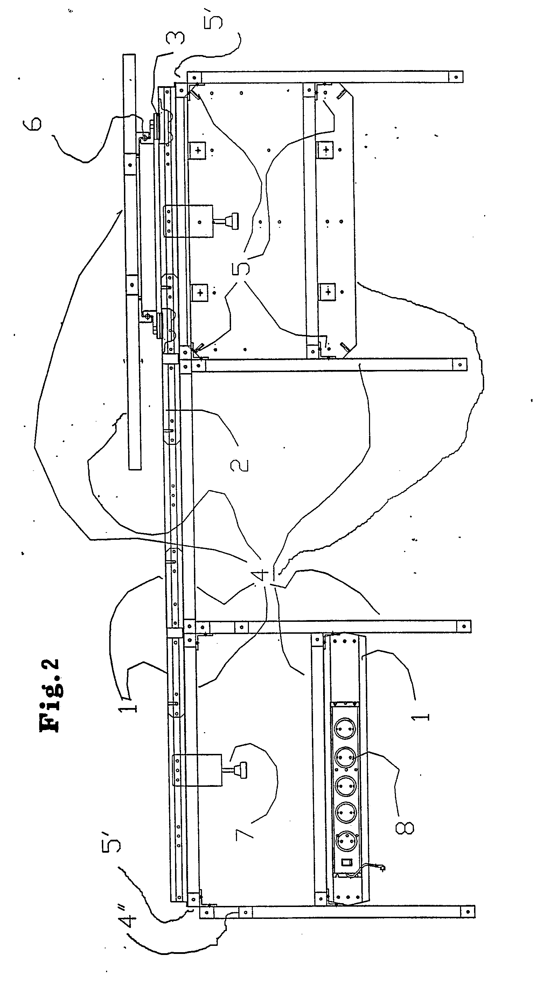

Die Fig. 1,2 zeigt die Erstellung eines Mehrfacharbeitsplatzes und die Verbindungen der Arbeitsplatten 4 mit Eckverbindern 5 die an den Schrägkanten der Arbeitsplatten 4, 4' und 4" und in die Rasterbohrungen auf den Plattenrückseiten eingesetzt werden. Dieser Mehrfacharbeitsplatz wird erstellt, indem zwei Arbeitsplatten 4 vertikal aufgestellt werden und mit einer oder mehreren Zwischenauflagen über die Eckverbinder 5 die in die Eckverbinderrasterbohrungen eingesetzt werden, ein H bilden. An der Oberkante dieser H-Konstruktion werden je zwei Eckverbinder 5 eingesetzt und bei rein stationärem Aufbau, eine Arbeitsplatte 4 als Deckplatte horizontal eingesetzt, oder aber Laufschienen 1, in die Laufrollen 3 mit aufgesetzten Arbeitsplatten 4, gemäß dem Vorgehen bei der verschiebbaren Arbeitsplatztechnik, eingesetzt werden. Die Laufschienen 1 werden nur bei Einrichtung von Mehrfacharbeitsplätzen durch Eckverbindern 5 mit den vertikalen Arbeitsplatten 4 verbunden, um ein freies Verschieben zu den darunterliegenden Arbeitsplatten 4 der Erweiterungsanbauten zu gewährleisten und werden ansonsten direkt auf die Rasterbohrungen der Arbeitsplatten 4, mit den Laufschienenseitenwänden aufgesetzt und durch Verbindungsbolzen gehalten. Die so zusammengefügte Aufstellung ergibt eine A Form, die einen stationären Einzelarbeitsplatz darstellt. Ein Mehrfacharbeitsplatz wird gebildet, indem in die Eckauflagen 5' von zwei Einzelarbeitsplätzen, eine Arbeitsplatte 4 horizontal eingelegt wird, und mit Eckverbindern 5, die in die Schrägkanten eingesetzt werden, fest verbunden werden, oder nur auf einer Seite befestigt und oder aber nur lose als Zwischenplatten zwischen den zwei Einzelarbeitsplätzen, eingesetzt wird. Die Eckauflage 5' der Einelarbeitsplätze dient jedoch auch gleichzeitig dazu, Einzelarbeitsplätze übereinander zustellen, und die Vertikalwände der übereinandergestellten Einzelarbeitsplätze durch Eckverbinder 5 in den Schrägkanten fest miteinander zu verbinden und somit Regalaufbauten zu realisieren. Bei Einsatz von Laufschienen 1 auf die Eckverbinder 5 und Aufsetzen einer verschiebbaren Arbeitsplatte 4, wird diese auf Laufrollen 3 stehende Arbeitsplatte 4 durch Randplatten 4', 4" erweitert, wobei diese Randplattenerweiterung die stationären Nachbarplatten überschneidet. Zur Mehrfacharbeitsplatzlinie in der Vorderansicht, ist im Endbereich eine Verbindung zur um 90 Grad abgewinkelten Aufstellung dargestellt. Es wird hier eine Mehrfacharbeitsplatzlinie in einfacher Breite einer Arbeitsplatte 4 aufgestellt, die durch vertikales Anfügen von Randarbeitsplatten 4' an die vertikal aufgestellten Arbeitsplatten 4 und Auflegen auf diese Randplattenstütze, von horizontalen, auskragenden Arbeitsplatten 4, um die doppelte, horizontale Auflagenbreite erweitert wird. Diese Arbeitsplatzzeile ist nach hinten mit einer Arbeitsplatte 4 verkleidet, die gleichzeitig eine Randplatte 4" abstützt, die in die Eckauflage 5' eingesetzt ist und beide Arbeitsplatzlinien rechtwinklig miteinander verbindet.

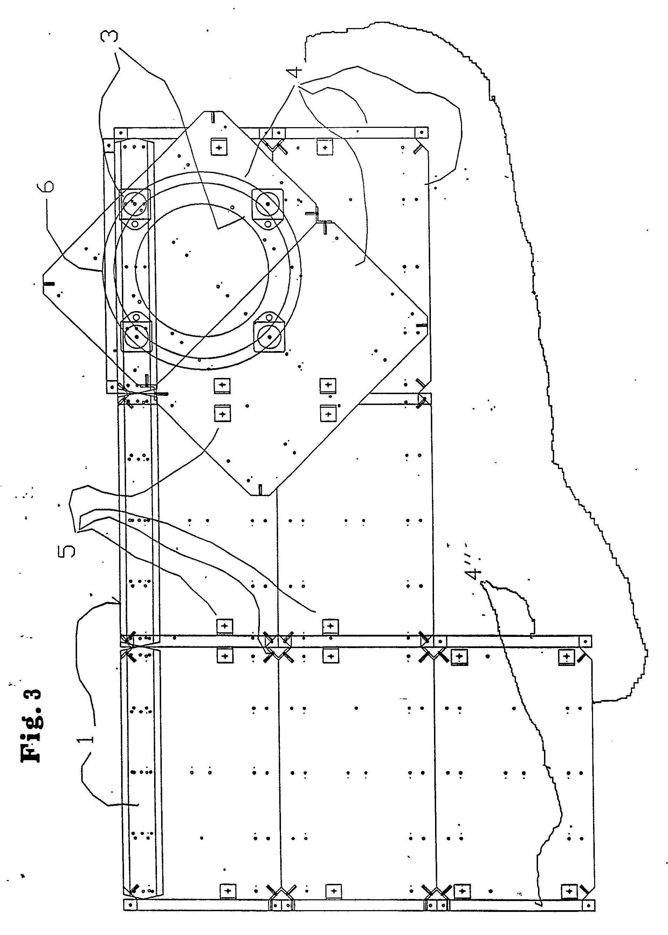

Bei dem Mehrfacharbeitsplatz gemäß der Fig. 2, 3 werden an der Außenkante Laufschienen 1 mit seitlich angesetzten Verbindungslaschen 2 in Längsrichtung miteinander verbunden und durch Feststeller 7, die ebenfalls in die seitlichen Rasterbohrungen der Laufschienen 1 eingesetzt werden, mit den horizontalen Arbeitsplatten 4 fest verbunden. In die Laufschienenlinie werden zwei Laufrollen 3 einer daraufstehenden Arbeitseinheit eingeführt und die gegenüberliegenden zwei Laufrollen 3 werden direkt auf die Oberfläche der horizontalen Arbeitsplatten 4 aufgesetzt, so daß bei einer horizontalen Verschiebung der Arbeitseinheiten auf den Arbeitsplatten 4, eine Führung durch die Laufschiene 1 erfolgt.

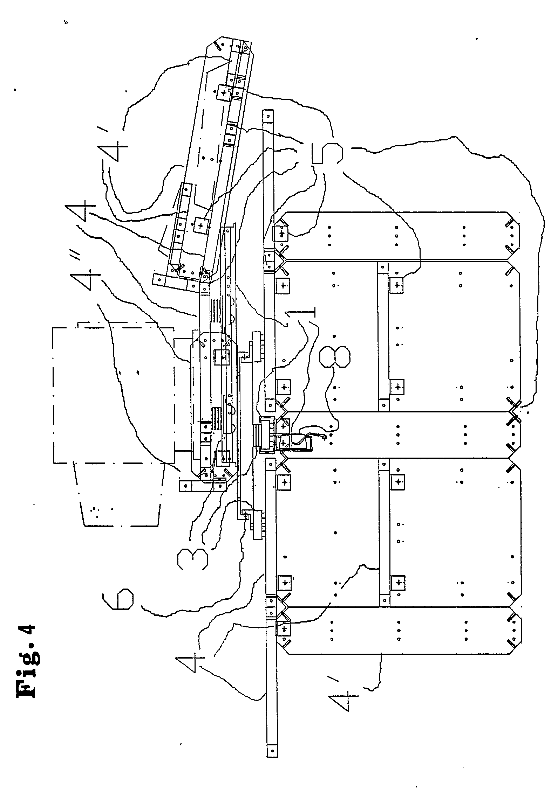

Bei dem Mehrfacharbeitsplatz gemäß der Fig. 4 werden zwischen zwei Mehrfacharbeitsplätze einfacher Breite vertikal, mittig Randarbeitsplatten 4' eingesetzt, die über Eckverbinder 5, die in die Rasterbohrungen auf den 90 Grad Schrägkanten eingesetzt werden, nach links und rechts mit den .vertikalen Arbeitsplatten 4 verbunden werden. In den dadurch entstandenen mittigen Zwischenspalt zwischen den zwei benachbarten Mehrfacharbeitsplätzen einfacher Breite werden Laufschienen 1 als Führungsschienen auf die vertikalen Randarbeitsplatten 4' aufgesetzt und mit Eckverbindern 5 befestigt, die an den Oberkanten der Randplatten 4' in die Eckverbinderrasterbohrungen eingesetzt werden. Die verschiebbaren Arbeitseinheiten werden mittig auf die Laufschienenführungslinie aufgesetzt und je zwei Laufrollen 3 in den Laufschienen 1 geführt und verfahren und je eine Laufrolle 3 links und rechts auf den Oberflächen der horizontalen Arbeitsplatten 4 abrollt, so daß in der Draufsicht eine zum Benutzer diagonale Laufrollenstellung entsteht. An die vertikalen Arbeitsplatten 4, links und rechts des Mehrfacharbeitsplatzes, werden zusätzliche Randarbeitsplatten 4' angeschlossen, die hier als Stütze fur eine horizontal auskragende, beinfreiheit schaffende Auflage von Arbeitsplatten 4 dienen. Die verschiebbare Arbeitseinheit wird hier für einen CAD-Arbeitsplatz vorgerüstet und besteht aus dem Drehring 6 mit Laufrollen 3 und auf dem Drehring 6 aufgesetzten zwei Laufschienen 1 als Auszieführung für die darauf auf Laufrollen 3 aufgesetzte Arbeitsplatte 4, als Monitorarbeitsplatte. Die Monitorarbeitsplatte wird nach hinten mit einer Randplatte 4' erweitert und seitlich von 2 Randplatten 4" als Seitenbegrenzung ausgeführt. Nach vorn, zum Benutzer hin, wird eine Arbeitsplatte 4 für die Aufnahme von Tastatur und Digitalisiertablett vorgesehen. Diese Tastaturarbeitsplatte wird mit der Monitorarbeitsplatte nur über die zwei Eckverbinder 5 in den 90 Grad Schrägkanten verbunden und mit der Rasterbohrungsseite nach oben eingesetzt. Beim Festziehen der zwei Eckverbinder 5 an der Verbindungslinie zur Monitorarbeitsplatte wird etwas Spiel gelassen, so daß eine leichtgängige Neigungsverstellung der Tastaturarbeitsplatte ermöglicht wird. Die Neigungsverstellung erfolgt durch das Eigengewicht der Tastaturarbeitsplatte dann zwangsläufig, wenn diese Arbeitsplatte 4 leicht angehoben wird, so daß die Unterseite vom Auflagepunkt auf den beiden Laufschienen 1 freikommt und die Monitorarbeitsplatte leichtgängig, über die Laufrollen 3 in den zwei Laufschienen 1 zum Benutzer hin, ein oder ausgeschoben wird. In einer neuen Verschiebeposition verändert sich auch der Auflagepunkt der Tastaturarbeitsplatte auf den Laufschienenendpunkt und die Neigungsverstellung dieser Arbeitsplatte 4 zum Benutzer. Eine besondere Arretierung zur Absicherung der Neigungsverstellposition entfällt durch den Reibungsschluß zwischen der Unterseite der Tastaturplatte und den Laufschienenendpunkten. Die Tastaturarbeitsplatte nimmt an der Verbindungslinie zur Monitorarbeitsplatte eine rechtwinklig eingesetzte Randarbeitsplatte 4' auf, die nach vorn zum Benutzer zusätzlich zwei Randarbeitsplatten 4' horizontal aufnimmt.

Dadurch entsteht über der Arbeitsplatte 4 die mit der Monitorarbeitsplatte verbunden ist, eine zweite dicht darüberliegende Zwischenauflage, die zur Aufnahme der Tastatur vorgesehen wird. Die Tastaturarbeitsplatte wird nach vorn zum Benutzer mit zwei weiteren Randplatten 4′ verlängert, die ebenfalls mit der Rasterbohrungsseite nach oben zeigend eingesetzt werden und ihrerseits eine Randplatte 4′ aufnehmen, deren Rasterbohrungen nach unten zeigen und somit mit den Rasterbohrungen der Randplatten 4′ darunter deckungsgleich übereinander liegen. Diese Randplatte wird eingesetzt, um einen auf der Tastaturplatte zusätzlich zur Tastatur aufgestellten Digitizer, unabhängig von der Neigungsverstellung der gesamten Tastaturarbeitsplatte, lediglich durch Versetzen der Randarbeitsplatte 4′ nach vorn oder hinten und Aufstecken der Verbindungsbolzen in das entsprechende neue Rasterbohrungsfeld, neigungsverstellen zu können. Seitlich der Tastaturarbeitsplatte mit den Randplattenerweiterungen 4′ werden zwei Randplatten 4′ als Seitenbegrenzung um 90 Grad vertikal gestellt und mit der Rasterbohrungsseite nach innen angeordnet, so daß eine Verbindung über die Eckverbinderrasterbohrungen und Einsetzen von Eckverbindern 5 die Tastaturarbeitsplatte mit allen Randarbeitsplatten 4′ zu einem stabilen Rahmen verbunden wird, der im unteren Bereich einen Digitizer und in der darübergeordneten Zwischenauflage die Tastatur aufnimmt. Die gesamte verschiebbare Arbeitseinheit ist durch Einschwenken über den Drehring 6 und dessen mittige Anordnung auf dem Mehrfacharbeitsplatz, von beiden Seiten, links und rechts des Mehrfacharbeitsplatzes erreichbar und bedienbar.

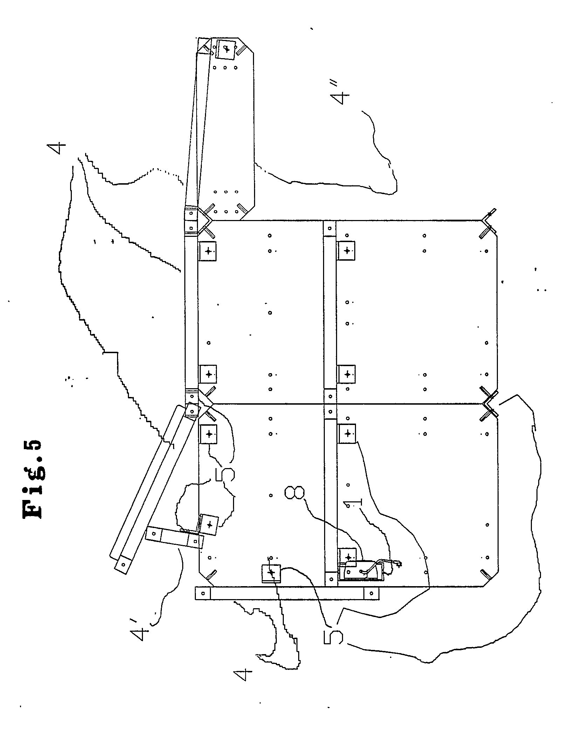

Bei dem Mehrfacharbeitsplatz der Fig. 5 werden Monitore und Tastaturen in Arbeitsplatten 4 fest eingebaut. Die Neigungsverstellung wird bei dieser rein stationären Arbeitsplatzanordnung durch Auflage auf Eckverbinder 5 die in die vertikalen Arbeitsplatten 4 oder Randarbeitsplatten 4′ 4″ eingesetzt werden, durchgeführt, oder durch Abstützung auf Randarbeitsplatten 4′,4″″ die in 90 Gradstellung zu den horizontalen Arbeitsplatten 4 eingesetzt werden. Als beinfreiheit schaffende Erweiterungsauflage von weiteren Arbeitsplatten 4 in der Breite werden hier zusätzliche Randarbeitsplatten 4″ eingesetzt.

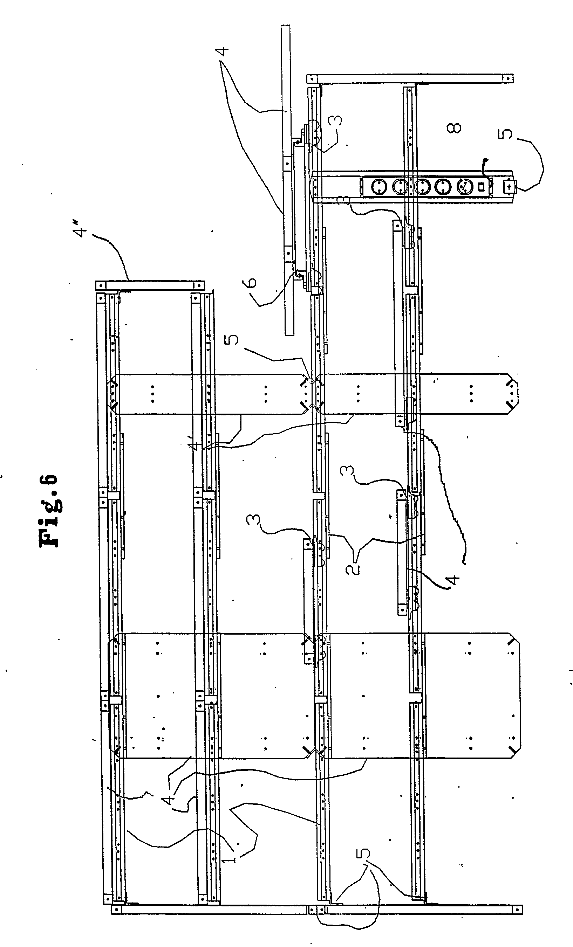

Bei dem Mehrfacharbeitsplatz gemäß der Fig. 6 erfolgt die Erweiterung in der Höhe durch kombinierten Einsatz von Arbeitsplatten 4, 4″ und Laufschienen 1 als vertikale Stützen. Horizontal werden hier nur Laufschienen 1 eingesetzt, so daß eine schnelle Umwandlung eines rein stationären regalähnlichen Aufbaus mit festen, auf den Laufschienen 1 direkt aufgesetzten Arbeitsplatten 4, in eine kombiniert verschiebbare Arbeitsplatzeinheit erfolgen kann, indem die fest aufgesetzten horizontalen Arbeitsplatten mit Laufrollen 3 ausgerüstet werden und in den Laufschienen 1 horizontal verschiebbar angeordnet werden. Der Einsatz von Arbeitsplatten 4 als zusätzliche vertikale Stützen zu den normalerweise eingesetzten Randarbeitsplatten 4, als Stützen, erfolgt insbesondere bei größerer Höhenerweiterung, um dem gesamten Mehrfacharbeitsplatz ein Höchstmaß an Standfestigkeit zu sichern.

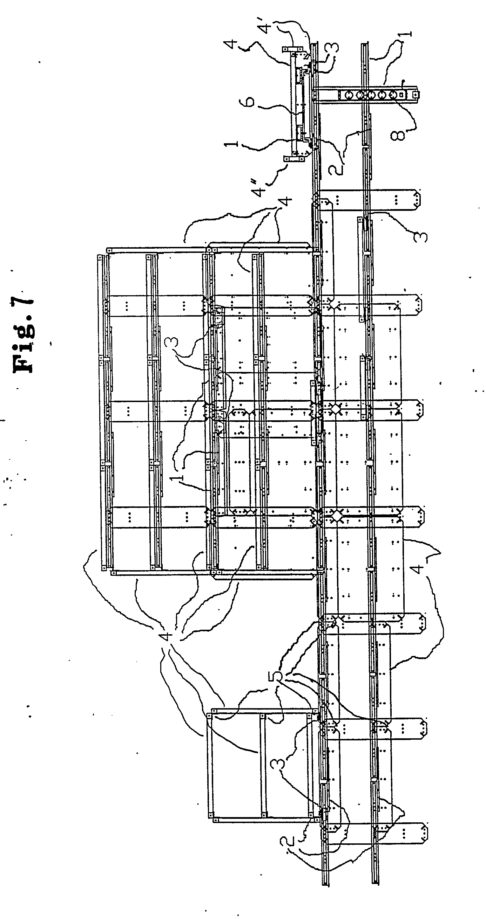

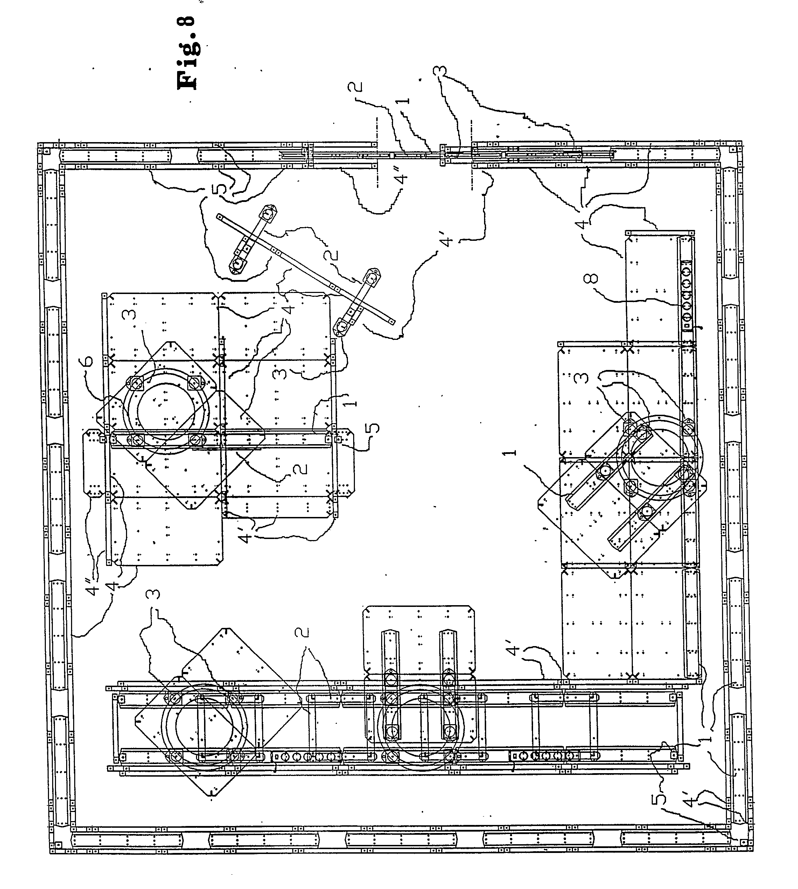

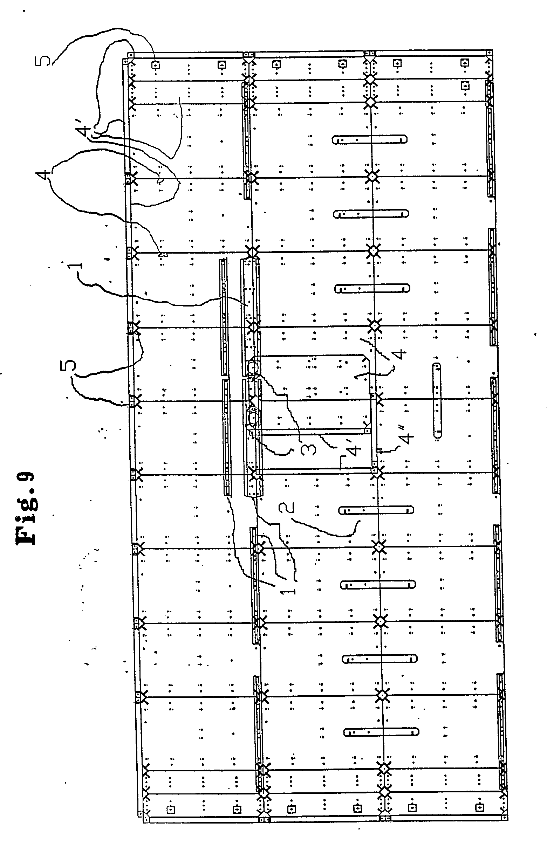

Der Mehrfacharbeitsplatz gemäß der Fig. 7 wird in der Grundkonzeption wie der Mehrfacharbeitsplatz gemäß der Fig. 6 ausgeführt. Es sind jedoch Arbeitsplatten 4, 4′ und 4″ als seitliche Verkleidungselemente vorgesehen werden, die über die seitlichen Rasterbohrungen der Laufschienen 1 mit direkt eingesetzten Verbindungsbolzen und Verbindung mit den Rasterbohrungen auf den Plattenrückseiten befestigt werden, oder aber über Zwischenverbindung mit Eckverbindern 5, die in die Laufschienenunterseiten eingesetzt werden. Außerdem wird die stationäre Seitenverkleidung mit einer verschiebbaren Seitenverkleidung kombiniert, die verschiebetürartig auf einer um 90 Grad zur normalen Laufschienenanordnung gedrehten Laufschiene mit Laufrollen 3, im Seitenprofil der Laufschienen 1 gleitend, verschiebbar vor oder hinter der stationären Seitenverkleidung und diese überlappend, Arbeitsplatzöffnungen verschließt. Es ist außerdem ein Verschiebewagen vorgesehen, der aus einem Einzelarbeitsplatz gebildet wird und an dessen vertikalen Arbeitsplatten, je zwei Eckverbinder 5 eingesetzt werden, die auf einer Verbindungslasche 2 aufgesetzt werden die an der Unterseite mit 2 Laufrollen 3 verbunden werden, so daß der gesamte Einzelarbeitsplatz in die Laufschienen 1 des Mehrfacharbeitsplatzes gestellt, horizontal geführt, verschiebbar ist. Entsprechend ist es möglich den in den Laufschienen 1 verschiebbaren Einzelarbeitsplatz nach oben oder in der Länge zu einem Mehrfacharbeitsplatz zu erweitern und größere Einheit innerhalb eines Gesamtaufbaus horizontal verschiebbar anzuordnen. Bei der Raumanordnung gemäß der Fig. 8, 9 wird eine Gesamtanordnung aufgeführt, die ausschließlich unter Verwendung der baugleichen Bauelemente der stationären und verschiebbaren Arbeitsplätze erstellt wird. So werden die stationäre Mehrfacharbeitsplätze mit den Bauelementen der verschiebbaren Arbeitsplätze kombiniert und eine räumliche Eckverbindung errichtet bei der eine hauptsächlich aus Laufschienen 1 erstellte Mehrfacharbeitsplatzlinie in rechtem Winkel mit einer hauptsächlich aus Arbeitsplatten 4 erstellten Mehrfacharbeitsplatzlinie verbunden wird, wobei in beiden rechtwinklig zusammengeführten Arbeitsplatzlinien die Bauteile der stationären und verschiebbaren Arbeitsplätze kombiniert eingesetzt werden. Außerdem wird in der Raumaufteilung ein Mehrfacharbeitsplatz mit mittig befestigter Laufschienenlinie 1 errichtet, dessen Arbeitseinheit jedoch nicht mittig in die Laufschiene eingesetzt werden, sondern entsprechend dem Schienenführungskonzept der Fig. 2 und 3. An diesem Arbeitsplatz wird eine Stellwand als Lichtschutz von Monitoren vorgeseheh und die aus vertikal aufgerichteten und entsprechend den Mehrfachplatenverkleidungen des Arbeitsplatzes gemäß der Fig. 7 zu Mehrfachplatten verbundenen Arbeitsplatten 4, 4' und 4" besteht und auf Verbindungslaschen 2 mit je zwei Laufrollen 3 bodenverfahrbar ausgeführt wird. Eine Seitenversteifung dieser einwandigen Stellwand erfolgt durch 90 Grad zur Wand eingesetzte Randplatten 4', 4" und Verbindung mit den vertikalen Arbeitsplatten 4 und Abstützung auf die Verbindungslaschen 2. Gleichermaßen wird die gesamte Raumwandverkleidung ausgeführt, wobei jedoch jeweils zwei einwandige Stellwände mit dazwischen als Distanzhalter und Verbindungselement angeordneten Laufschienen 1, zu doppelwandigen Stellwänden aufgebaut werden, die an den Enden rechtwinklig zusammengeführt werden und durch Randarbeitsplatten 4', 4" und unter Verwendung von Eckverbindern 5 in diesem Bereich miteinander verbunden werden 5. Ein Randabschluß mit Randarbeitsplatten 4' 4" erfolgt auch an der Oberkante der rechwinklig zueinander augestellten doppelwandigen Stellwände und an seitlichen Öffnungen die als Türen oder Fensteröffnungen vorgesehen werden. In Öffnungsbereichen werden dann zusätzlich Schiebeverkleidungen vorgesehen, deren um 90 Grad zur normalen Laufrichtung gedrehte Laufschienen in der doppelwandigen Stellwand eingesetzt werden, so daß die Mehrfacharbeitsplatten, die als verschiebbare Schiebetür- oder Schiebefensteröffnungen eingesetzt werden, beim Öffnungsverschiebevorgang, in die doppelwandige Stellwand eingeschoben werden und dort Platz finden. Die gesamte, aus doppelwandigen Stellwänden gebildete Raumverkleidung wird fürdie Verschiebung in der Aufstellungsgrundfläche auf Laufrollen 3 gesetzt, die in den Laufschienenrasterbohrungen der Laufschienen 1 eingesetzt werden, die an der Unterkante der doppelwandigen Stellwand als Seitenversteifung und Verbindungselement der doppelwandigen Stellwand, eingesetzt werden.

**Ansprüche**

1. Arbeitsplatz mit Laufschienen und verschieb- und drehbaren Arbeitsplatten mit Laufschienen die an der Unterseite mit Verbindungslaschen aneinandergekettet sind und Laufrollen die in den Laufschienen gleiten; im Gelenkpunktabstand der Verbindungslaschen angeordnet und mit daraufstehenden Arbeitsplatten verbunden sind, dadurch gekennzeichnet, daß die Arbeitsplatten (4) durch schmale Randarbeitsplatten (4', 4") ergänzt werden, daß die Arbeitsplatten (4) und Randarbeitsplatten (4', 4") zusätzlich zu den Rasterbohrungen im Gelenkpunktabstand der Verbindungslaschen (2), Eckverbinder-Rasterbohrungen zur Aufnahme von Eckverbindern (5) erhalten, die baugleich den Eckverbindern (5) sind, die für die Verbindung zu Mehrfachplatten an den abgeschrägten Ecken eingesetzt werden, daß die Arbeitsplatten (4) gleich lang den Laufschienen (1) erstellt werden und die Arbeitsplatten (4) und Randarbeitsplatten (4', 4") in baugleicher Ausführung horizontal als Arbeitsplatten (4) und vertikal als Plattenstützen, über die Eckverbinder-Rasterbohrungen mit eingesetzten Eckverbindern (5) zu stationären Arbeitsplätzen aufgebaut werden und mit den Bauelementen der verschiebaren Arbeitsplätze kombiniert werden.

2. Arbeitsplatz nach Anspruch 1 dadurch gekennzeichnet, daß die Randarbeitsplatten (4') in der Länge gleich der Längsseite der Arbeitsplatten (4) und die Randarbeitsplatten (4") in der Länge gleich der Breitseite der Arbeitsplatten (4) und die Randarbeitsplatten 4', 4" zueinander gleich breit ausgeführt werden und die Laufschienen (1) sowohl an der Unterseite als auch an den Seitenkanten zusätzlich zu den Rasterbohrungen für die Verbindungslaschen (2) mit Rasterbohrungen ausgerüstet werden, die den Eckverbinder-Rasterbohrungen an den Plattenunterseiten der Arbeitsplatten (4) entsprechen und die Randplatten (4', 4") an den Plattenunterseiten nach dem Rasterbohrungsmuster der Laufschienen (1) mit Bohrungen im Rasterabstand der Verbindungslaschen (2) und Bohrungen im Eckverbinder-Rasterbohrungsabstand ausgeführt werden und Platten (4) Randplatten (4', 4") und Laufschienen (1) als Stützen für stationäre und verschiebbare Arbeitsplätze eingesetzt werden.

3. Arbeitsplatz nach einem der Ansprüche 1 bis .. 2 dadurch gekennzeichnet, daß jeweils eine links und rechts angeordnete Arbeitsplatte (4, 4', 4") mit den horizontalen Arbeitsplatten (4) über die Eckverbinder (5) die in die Eckverbinder Rasterbohrungen an den Rändern der Plattenkopfseiten eingesetzt werden, eine spitze rechtwinklige Verbindung darstellen und daß in die entstehende Eckauflauge (5'), Erweiterungsplatten (4,4',4") oder Laufschienen (1) eingesetzt werden und darunter horizontale Arbeitsplatten (4,4',4") oder Laufschienen (1) als Zwischenauflagen die über die Eckverbinder Rasterbohrungen die längsseitig der Arbeitsplatten (4,4',4") mit Eckverbindern (5) befestigt werden und einen stationären oder kombiniert verschiebbaren Einzelarbeitsplatz bilden, der in Längsrichtung dadurch erweitert wird, daß in die Eckauflagen (5') horizontal nach links oder rechts weitere Arbeitsplatten (4, 4', 4") oder Laufschienen (1) eingesetzt werden und dann wieder durch Zwischenauflagen und vertikalen Platten (4,4',4") oder Laufschienen (1) oder aber einen weiteren Einzelarbeitsplatzplatz gestützt werden und dadurch um die doppelte oder mehrfache Länge erweitert wird und in Querrichtung durch Hintereinandersetzen von Einzelarbeitsplätzen mit Erweiterungsplatten und Verbindung über die Eckverbinder (5) und Rasterbohrungen an den Schrägkanten um die doppelte oder mehrfache Breite erweitert wird und in der Höhe durch Aufsetzen von weiteren Einzelarbeitsplätzen und Befestigung über die Eckverbinder (5) in den Rasterbohrungen der Schrägkanten und dadurch in der Höhe zu stationären oder kombiniert verschiebbaren Regalaufbauten erweitert wird.

4. Arbeitsplatz nach einem der Ansprüche 1 bis 3 dadurch gekennzeichnet, daß in die seitlichen Rasterbohrungen der Laufschienen (1) oder in die Enden der Laufschienen (1) und daran befestigten Eckverbindern (5), Verbindungslaschen (2) oder Randarbeitsplatten (4′,4″), Feststeller (7) eingesetzt werden, mit denen eine Laufschienenlinie an der Außenkante quer oder längs zu dem stationären Arbeitsplatzaufbau befestigt wird und daß jeweils zwei Laufrollen (3) einer Arbeitsplatte (4) oder eines Drehrings (6) bei Verschiebung auf den Arbeitsplatten (4) geführt und gehalten werden, während die zwei gegenüberliegenden Laufrollen (3), direkt auf den Arbeitsplatten (4) aufliegen und abrollen und daß neben oder in 90 Grad zur horizontalen Laufschiene (1) eine zweite Linie Laufschienen (1) verlegt wird, die innenliegende Stromschienen und Steuerstromleitungen und Stromabnehmerwagen führt, die mit den auf Laufrollen 3 horizontal verschiebbaren Einheiten verbunden werden und bei der horizontalen Verschiebung der Arbeitseinheiten, zwangsläufig mitgenommen werden und die verschiebbaren Einheiten als kabellose Strom- und Steuerstromzuführung mit Strom und Steuerungsimpulsen versorgen und daß in Laufschienen 1 Steckdosenleisten 8 innenliegend verschiebbar zusätzlich eingesetzt werden und neben oder in 90 Gradstellung zu den Führungschienen der Laufrollen 3 verlegt werden, oder aber unter Arbeitsplatten 4 horizontal, oder vertikal als verteilbare Stromzuführung eingesetzt werden.

5. Arbeitsplatz nach einem derAnsprüche 1 bis 4 dadurch gekennzeichnet, daß die Laufschiene (1) zur Führung der Laufrollen (3) an der Außenkante der horizontalen Arbeitsplatten (4), zur Oberkante der horizontalen Arbeitsplatten (4) höhenversetzt, auf Verbindungslaschen (2) aufgesetzt werden, die unter den horizontalen Arbeitsplatten (4) in den Rasterbohrungen befestigt werden und über die Außenkante auskragend, die Laufschiene (1) in der freiliegenden Rasterbohrung aufnimmt und daß bei doppelter oder mehrfacher Breite der Arbeitsplätze, Randplatten (4′,4″) mit der Rasterbohrungsrückseite nach oben, nur an den Schrägkanten mit Eckverbindern (5) und den Arbeitsplatten (4) verbunden werden und die Laufschienen (1) mit der Rückseite auf den Rasterbohrungen der Randplatten (4′,4″) direkt aufliegen und durch Einsatz von Verbindungsbolzen in die innenversenkten Rasterbohrungen der Laufschienen (1) fest mit den Randplatten (4′,4″) verbunden werden.

6. Arbeitsplatz nach einem der Ansprüche 1 bis 5 dadurch gekennzeichnet, daß die Arbeitplatzaufbauten durch stationär angeordnete Arbeitsplatten (4) und Randarbeitsplatten (4′, 4″) seitenverkleidet werden und durch Laufschienen (1), die um 90 grad zur normalen Lauffläche gedreht an den Rasterbohrungen der Laufschienen (1) des Arbeitsplatzaufbaus befestigt werden, Laufbahnen gebildet werden, in denen Arbeitsplatten (4) und Mehrfacharbeitsplatten mit Laufrollen (3) vertikal eingehängt gleiten und Schiebetürverkleidungen gebildet werden, die je nach Anordnung der um 90 grad gedrehten Laufschiene (1), vor oder hinter den fest eingesetzten Arbeitsplattenverkleidungen, angesetzt werden.

7. Arbeitsplatz nach einem der Ansprüche 1 bis 6 dadurch gekennzeichnet, daß die stationären Arbeitsplätze (4) in den horizontalen Arbeitsplattenbereichen durch zusätzliche Arbeitsplatten (4) ergänzt werden, die komplette Elektronikeinheiten, Tastaturen oder Monitore beinhalten, jedoch in den Horizontalmaßen, Arbeitsplatten (4) entsprechen und ebenfalls mit SchrägkantenRasterbohrungen zur Aufnahme der Eckverbinder (5) ausgerüstet sind und an der Unterseite entsprechende Eckverbinder Rasterbohrungen aufweisen und daß die zusätzlichen Arbeitsplatten (4) über loses Einstellen der Eckverbinder (5) eine Neigungsverstellung zum Benutzer erhalten, die in den Endstellungen durch die Randplatten (4′,4″) oder Laufschienenpaare (1) bei Höherstellung oder Absenkung, an der gegenüberliegenden Seite zu den Eckverbindern (5) mit eingesetzten Drehbolzen die bei der Neigungsverstellung als Drehachse dienen, zusätzlich gestützt werden.

8. Arbeitsplatz nach einem der Ansprüche 1 bis 7, dadurch gekennzeichnet, daß die Arbeitsplatten (4) und zusätzlichen Arbeitsplatten (4) mit Elektronik, Tastatur oder Monitoreinheiten und Rand-Arbeitsplatten (4′,4″) mit Eckverbindern (5) zu großflächigen Mehrfachplatten zusammengesetzt werden die vertikal zu Ausstellungs- Trenn- und zu Computer-Lichtschutzwänden aufgerichtet werden und die durch Verbindungslaschen (2) die in die Rasterbohrungen der Arbeitsplatten (4,4′,4″) auf den Plattenrückseiten stabilisierend und verbindend eingesetzt werden und auf Verbindungslaschen (2) gestellt werden, die quer zur vertikalen Wandaufstellung eingesetzt werden und die in den Rasterbohrungen je zwei Laufrollen (3) aufnehmen und auf denen die Gesamtwand verschiebbar ist.

9. Arbeitsplatz nach einem der Ansprüche 1 bis 9 dadurch gekennzeichnet, daß jeweils zwischen zwei großflächigen, vertikal aufgerichteten Mehrfachplatten Laufschienen (1) eingesetzt werden, die über die Eckverbinder Rasterbohrungen der Arbeitsplatten (4, 4′,4″) und die seitlichen Rasterbohrungen der Laufschienen (1) doppelwandige, stationäre oder auf Laschen (2) mit Laufrollen (3) verfahrbare Ausstellungs- Trenn- und Computer-Lichtschutzwände errichtet werden und daß über Verbindung mit den Randplatten (4′) an den Längseiten und Verbindung mit Eckverbindern (5), die in die Eckverbinder Rasterbohrungen eingesetzt werden, doppelwandige Raumeinheiten entstehen und daß die doppelwandigen Raumeinheiten Fenster- und Türöffnungen beinhalten deren seitlicher Abschluß durch Aufsetzen von Randplatten (4′, 4′) auf die doppelwandigen Randkanten erfolgt, die durch Eckverbinder (5) über die Eckverbinder Rasterbohrungen mit den Arbeitsplatten (4, 4′, 4″) verbunden werden und daß die Fenster und Türöffnungen durch Schiebtürverkleidungen verschlossen werden, die aus Mehrfacharbeitsplatten doppelwandig gebildet werden und die in den doppelwandigen Arbeitsplatten (4,4′,4″) in Laufschienen (1) gleiten, die um 90 grad zur normalen Laufrichtung gedreht, in den Doppelwänden, an Laufschienen (1), die als Querversteifung eingesetzt sind, befestigt werden.

**Fig.1**

EP 0 335 228 A1

Fig.2

**Fig. 3**

EP 0 335 228 A1

EP 0 335 228 A1

**Fig. 4**

# Fig.5

EP 0 335 228 A1

Fig.6

Fig.7

Fig. 8

EP 0 335 228 A1

Fig. 9

EP 0 335 228 A1

## EINSCHLÄGIGE DOKUMENTE

EP 89105048.6

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| D,A | <u>DE - C1 - 3 635 879</u> <br> (KOCHANNECK) <br> * Gesamt * | 1 | B 65 G 37/00 <br> B 65 G 21/22 <br> B 23 P 19/04 |

------

|  | RECHERCHIERTE SACHGEBIETE (Int. Cl.4) |
|---|---|
|  | B 23 P <br> B 25 H <br> B 65 G |

Der vorliegende Recherchenbericht wurde für alle Patentansprüche erstellt.

| Recherchenort | Abschlußdatum der Recherche | Prüfer |
|---|---|---|
| WIEN | 01-06-1989 | BAUMGARTNER |